# EUROPEAN PATENT SPECIFICATION

(11) **EP 4 393 301 B1**
(45) Date of publication and mention of the grant of the patent: **13.08.2025**
(21) Application number: 23217298.1
(22) Date of filing: 15.12.2023
(51) Int. Cl.: A01K 1/01, A01K 1/00

(54) **SELF-CLEANING CAT LITTER BOX**
SELBSTREINIGENDE KATZENSTREUBOX
BOÎTE À LITIÈRE POUR CHAT AUTONETTOYANTE

(30) Priority: 27.12.2022 CN 202223507056 U
(43) Date of publication of application: 03.07.2024
(73) Proprietor: Guangzhou Bochong Technology Co., Ltd., Guangzhou City (CN)
(72) Inventor: WANG, Li, Guangzhou (CN); WU, Hanwu, Guangzhou (CN); WANG, Dongliang, Guangzhou (CN)
(74) Representative: Kieffer, Valentin

(56) References cited:
- CN-A- 110 367 134
- CN-A- 113 163 730
- CN-B- 112 189 570
- US-A1- 2005 028 744

## Description

### Technical field

This application relates to the field of pet products, in particular to a cat litter box cleaning itself automatically.

### Background technique

A traditional cat litter box is a shallow box-shaped device with an opening on the top, and cat litter is placed in it. The cat can excrete inside the box after entering the litter box.

These open litter boxes have several disadvantages: first, they offer little ability to absorb or control smells from animal waste, and for this reason, these types of litter boxes are often placed further away from the living room; The cat litter box requires the breeder to regularly remove animal excrement, change the cat litter from time to time, and clean the cat litter box occasionally; thirdly, due to the cat's own habits, it likes to dig, kick or otherwise spread cat litter in the cat box. It is common for large amounts of litter or excrement to be kicked out of the litter box; and, because the low sides of the litter box cannot block the cat, depending on the individual cat's habits, the cat will sometimes "stagger the litter box" and get in the litter box. The outer edges of the cat's claws are covered with excrements; in addition, the bottom of the cat's claws will bring out a large amount of cat litter from the litter box.

All these shortcomings will lead to frequent cleaning of the cat litter box and the surrounding ground, which requires a lot of time from the owners. At the same time, if the pet excrement is not processed in time, the smell it emits will seriously affect the indoor air environment, which will bring a lot of inconvenience to the daily life of the breeders.

Some cat litter boxes on the market are able to deal with or circumvent some of these problems: for example, some litter boxes include higher side walls and tops and have openings at one or either end to allow cats to enter and exit the box. In addition, some litter boxes contain deodorant materials to help mask the smell from animal waste; new cat litter technology has also developed "clumping" cat litter, which forms clumps around the excreted liquid and makes it easier for the breeder to clean it out.

While the litter boxes and new cat litters described above address some of the issues discussed above, they do not solve them all.

CN111837971B discloses a cat excrement cleaning device and method. The cat excrement cleaning device includes a rotating accommodating member and a sand screening assembly. The rotating accommodating member is used to accommodate cat litter; the sand screening assembly is arranged in the rotating accommodating member. The sand screening assembly includes a first sand screening member and a second sand screening member. The first sand screening member can overlap with the second sand screening member to form a sand loading trough, or be closed to form a sand screening cavity, thereby completing the screening of cat excrement.

However, there is still room for improvement, and even though the above-mentioned device known from CN111837971B realizes automatic cleaning of cat excrement, the cat excrement is not isolated from the surrounding environment, so the unpleasant smell can still be emitted into the surrounding environment.

US2005028744 discloses a cat litter box with rotatable floorboards for disposing cat excrement. CN110367134 and CN112189570 discloses a cat litter box with a rotatable cylinder in which the litter is placed.

CN110367134 discloses a self-cleaning cat litter box including a rotatable chamber having a first opening with a closing member defined in its outer surface for animals to enter and exit, a second opening with a screen and a third opening, both also defined in its outer surface.

CN113163730A discloses a garbage collection device for processing animal feces.

The garbage collection device includes a device base including a container and a chamber located on the base, the chamber being rotatable about a rotation axis. When the chamber is in the first position, the chamber opening can serve as an entrance for animals to enter the chamber for excreting animal waste, and when the chamber is in the second position, the chamber opening can serve as a trash opening for dumping animal waste into a container middle. However, cat excrement is not isolated from the surrounding environment, especially connected to the cat litter box, so the smell of cat excrement still affects the indoor air environment and becomes increasingly pungent over time.

### Summary of the invention

In order to achieve the above and other purposes, and according to the purpose of the present application, the present invention provides a self-cleaning cat litter box according to claim 1. The self-cleaning cat litter box removes cat excrement and smell through an improved separation and processing method. Cat waste and smells are eliminated and do not pose a danger to pets.

The self-cleaning cat litter box includes a rotatable chamber that can rotate around a rotation axis, and the rotatable chamber is used to accommodate cat litter. The rotatable chamber has a first opening limited on the outer wall of the chamber and suitable for animals to enter and exit, and a closing member disposed on the first opening. The first opening is suitable for animals to enter and exit, and the closing member is used to at least partially close the first opening. The closing member may be a sliding door, and the closing member at least partially closes the first opening by sliding. Preferably, the closing member, the sliding door, includes at least one slidable door leaf and a slide rail for sliding the door leaf. Alternatively, the closing member, the sliding door, includes two door leaves. When the two door leaves slide toward each other, the two door leaves close the rotatable chamber through snapping; the edges of the door leaves are smooth and gentle to avoid scratching or pinching animals; the slide rails are also provided with rubber strips so that the door leaves slide along the slide rails, and the rubber strips are in close contact with the door leaves, so that the rubber strips always cover all the doors. The sliding rail; the sliding door has good sealing performance after sliding and closing the first opening, so as to reduce the leakage of smell as much as possible.

The advantage of a sliding door design is, first of all, ease of use: a sliding door design is easier to open and close than other types of hinged doors, especially if the door leaf is lightweight and the slide rails are smooth and well-lubricated.

This can be particularly useful if the door opens and closes frequently, or if it needs to be opened and closed quickly in an emergency.

The second is durability: a sliding door design may be more durable and long-lasting than other types of doors, especially if the door leaves and slides are made of sturdy materials and are well maintained. This may be important if the door gets yellowed from heavy use or from pets.

The third is space savings: Sliding door designs may take up less space than other door types, especially if the door leaf slides along the outside of the cavity rather than swinging open. This can be useful if space is limited, or if the door needs to be placed in a location where it will be blocked by other objects when opening.

Fourth is customizability: Sliding door designs may be easier to customize or modify than other types of doors. For example, door leaves and rails can be made in different sizes or shapes to meet the specific needs of the application, and additional features such as lockable handles or windows can be added to the door as needed.

The rotatable chamber has a second opening defined in its outer surface, the second opening can selectively process and pass waste materials therethrough, and the rotatable chamber can open or close the second opening by rotation.

The rotatable chamber includes a screen connected to the second opening to screen out objects larger than a predetermined size, including cat waste.

The rotatable chamber has a third opening for intake of air fluid and a fourth opening for exhaust of air fluid defined in its outer surface.

The third opening is provided with a ventilation fan, and the air outlet is directed toward the rotatable chamber along the third opening.

The self-cleaning cat litter box also includes an excrement collection bin. When the screen discharges the cat excrement through the second opening, the excrement collection bin is in fluid connection with the second opening.

The self-cleaning cat litter box also includes a support base for supporting the entire device. The support base includes an elastic valve. When the screen discharges the cat excrement through the second opening, the elastic valve cuts off the air flow between the excrement collection bin and the second opening.

The self-cleaning cat litter box also includes an integrated sensor. The integrated sensor is used to detect the presence or absence of an animal; when an animal is detected to move in front of the self-cleaning cat litter box, it can provide illumination in low light conditions; and to the microprocessor inside the integrated sensor provides one or more presence signals; the microprocessor controller inside the integrated sensor can process the sensor signals and start different defined programs according to different signals.

Optionally, the integrated sensor is a combination of a weight sensor, a thermal imaging sensor, a light sensor, an LED lighting lamp, and a microprocessor controller.

The weight sensor is used to detect the presence or absence of animals in the automatic cleaning cat litter box; the thermal imaging sensor is used to detect whether animals move in front of the automatic cleaning cat litter box; the light sensor is used to detect the ambient light brightness ; The LED lighting uses signal feedback from the light sensor to determine whether to turn on for lighting; the microprocessor controller is used to process the sensor signal and start different setting programs according to different signals.

The integrated sensor is at least one of a weight sensor, a microwave radar, an ultrasonic sensor, an infrared sensor, a camera, a thermal imaging sensor, a light sensor, a millimetre wave radar, a laser sensor, an LED lighting, a microprocessor controller, or two of them. A combination thereof is also possible.

The self-cleaning cat litter box also includes a bottom housing connected to the rotatable chamber. Optionally, the self-cleaning cat litter box also includes a top housing and a bottom housing, wherein a garbage bag storage box is provided on the side of the bottom housing for storing garbage bags.

Optionally, an exhaust pipe is provided at the rear end of the bottom housing, and the exhaust pipe is connected to the fourth opening through an internal hose.

Steps to remove cat waste and smell include:
S1. The closing member closes the first opening;
S2. The rotatable chamber rotates in a first direction from the initial position, opens the second opening and loads the cat litter containing cat excrement into the screen;
S3. The sieve mesh discharges the cat excrement through the second opening, and the cat litter is screened out;
S4. The rotatable chamber rotates in the opposite direction to the first direction, returns the screened cat litter, and at the same time closes the second opening;
S5. The air fluid enters the rotatable chamber through the third opening, and the fourth opening discharges the air fluid from the rotatable chamber.

The application provides a method for removing cat excrement and smell from cat litter, including a self-cleaning cat litter box.

The cat litter is placed in the rotatable chamber of the device. When the cat discharges its excrement into the cat litter and exits the rotatable chamber, the cat litter containing the excrement is screened and cleaned through various components.

Specifically: the rotatable chamber is closed, and then the rotatable chamber is rotated in the first direction from the initial position, driving the screen to screen out the cat excrement and transfer it to the excrement collection bin by gravity; and then the rotatable chamber is rotated in the first direction. The chamber rotates and resets in the direction opposite to the first direction, and finally, under the action of the ventilation fan, the smell is discharged through the two ventilation openings.

The beneficial effects of the application are: the device has a simple structure, is easy to operate, has a high degree of automation, is environmentally friendly and hygienic, can provide a good clean defecation place for pet cats, and realizes the effect of self-cleaning pet cat feces.

The application does not require regular replacement of cat litter, avoids waste in the use of cat litter, does not require manual sand shoveling and sand discharge, and can provide breeders with a convenient breeding experience.

### Description of the drawings

The invention and its advantages will be better understood by studying the invention by way of non-limiting examples and by a detailed description of specific embodiments as shown in the accompanying drawing, in which:
Figure 1 is a schematic flow diagram of an embodiment of the present application.
Figure 2 is an exploded view of the automatic cleaning cat litter box according to the embodiment of the present invention.
Figure 3 is a front view of the main components of the automatic cleaning cat litter box according to the embodiment of the present invention.
Figure 4 is a side view of the main components of the automatic cleaning cat litter box according to the embodiment of the present invention.
Figure 5 is a perspective view of the main components of the automatic cleaning cat litter box according to the embodiment of the present invention.
Figure 6 is an exploded side view of the self-cleaning cat litter box according to the embodiment of the present invention.
Figure 7 is an exploded front view of the self-cleaning cat litter box according to the embodiment of the present invention.
Figure 8 is an exploded front view of the self-cleaning cat litter box with the sliding door in an open state according to the embodiment of the present invention.
Figure 9 is a schematic diagram of the sliding state of the sliding door according to the embodiment of the present invention.
Figure 10 is a schematic diagram of the sliding door in the closed state according to the embodiment of the present invention.

### Detailed description

Reference is made to the accompanying drawings, in which the same component symbols represent the same components. The principle of the present invention is illustrated by an example of implementation in an appropriate environment.

The following description is based on the illustrated specific embodiments of the present invention, and should not be regarded as limiting other specific embodiments of the present invention that are not described in detail here.

The word "embodiment" as used in this specification is meant to serve as an example, example, or illustration.

Furthermore, the article "a" or "an" as used in this specification and the appended claims may generally be construed to mean "one or more" unless otherwise specified or the context clearly dictates a singular form.

In the description of the present invention, it should be understood that the terms "center", "longitudinal", "transverse", "length", "width", "thickness", "upper", "lower", "front", The directions indicated by "back", "left", "right", "vertical", "horizontal", "top", "bottom", "inside", "outside", "clockwise", "counterclockwise" etc. Or the positional relationship is based on the orientation or positional relationship shown in the drawings, which is only for the convenience of describing the present invention and simplifying the description, and does not indicate or imply that the device or element referred to must have a specific orientation, be constructed in a specific orientation, and operation, therefore it cannot be construed as a limitation of the present invention.

In the present description, it should be noted that, unless otherwise explicitly stipulated and limited, the terms "set", "connected" and "connected" should be understood in a broad sense. For example, it can be a fixed connection or a removable connection. Detachable connection, or integral connection; it can be a mechanical connection, an electrical connection or mutual communication; it can be a direct connection, or an indirect connection through an intermediate medium, it can be an internal connection between two elements or a mutual communication between two elements functional relationship.

For those of ordinary skill in the art, the specific meanings of the above terms in the present invention can be understood according to specific circumstances.

In addition, unless otherwise expressly provided and limited, "above" or "below" a first feature to a second feature may include that the first and second features are in direct contact, or may include that the first and second features are not in direct contact. Rather, it is through additional characteristic contact between them.

Furthermore, the term "above" the first feature on the second feature include that the first feature is directly above and diagonally above the second feature, or means that the first feature is higher in level than the second feature.

"Below", "under" and "beneath" the first feature is the second feature includes the first feature being directly below and diagonally below the second feature, or means that the first feature is less horizontally than the second feature.

The following disclosure provides many different embodiments or examples for implementing different structures of the present invention. In order to simplify the disclosure of the present invention, the components and arrangements of specific examples are described below. Of course, they are only examples and are not intended to limit the invention.

Furthermore, the present invention may repeat reference numbers and/or reference letters in different examples, such repetition being for purposes of simplicity and clarity and does not in itself indicate a relationship between the various embodiments and/or arrangements discussed.

In addition, the present invention provides examples of various specific processes and materials, but those of ordinary skill in the art may recognize the application of other processes and/or the use of other materials.

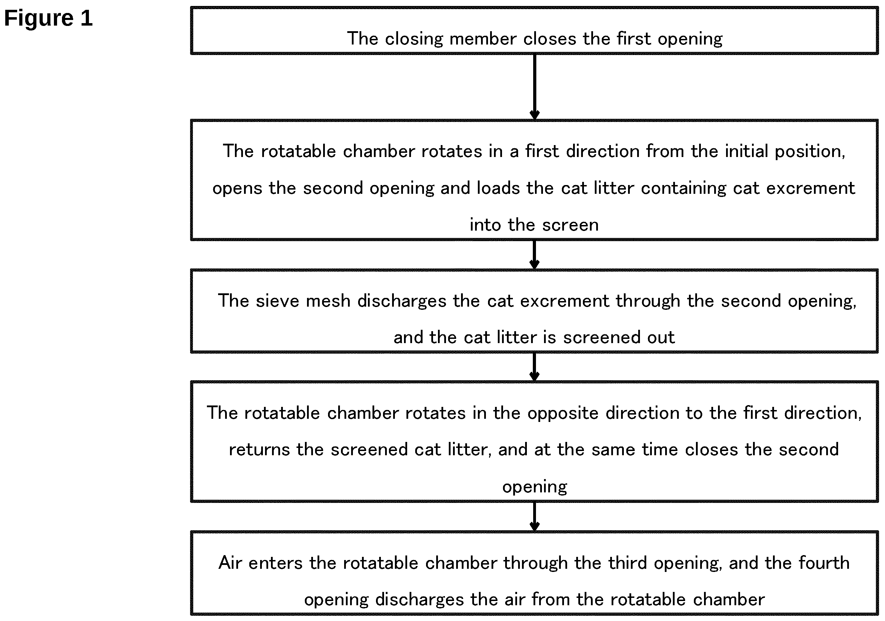

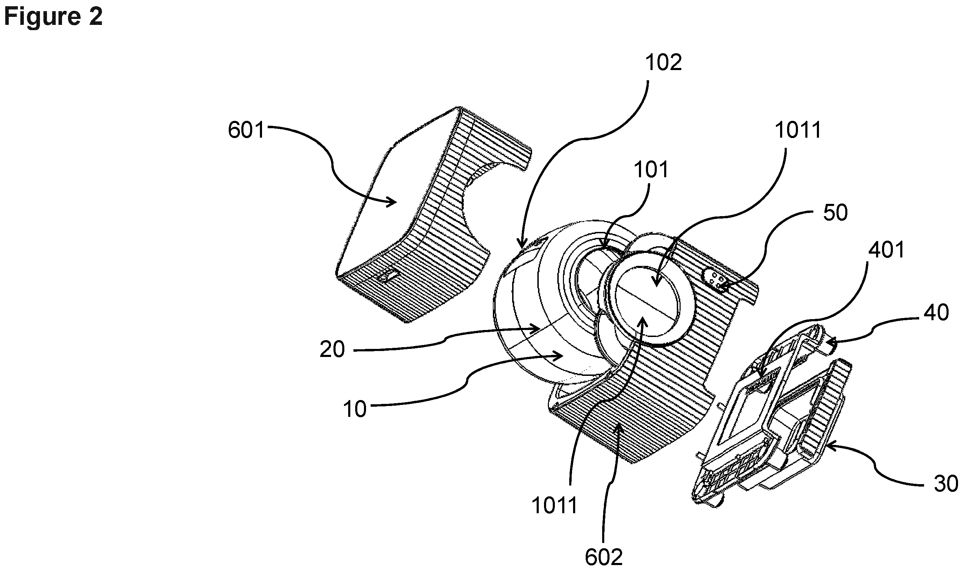

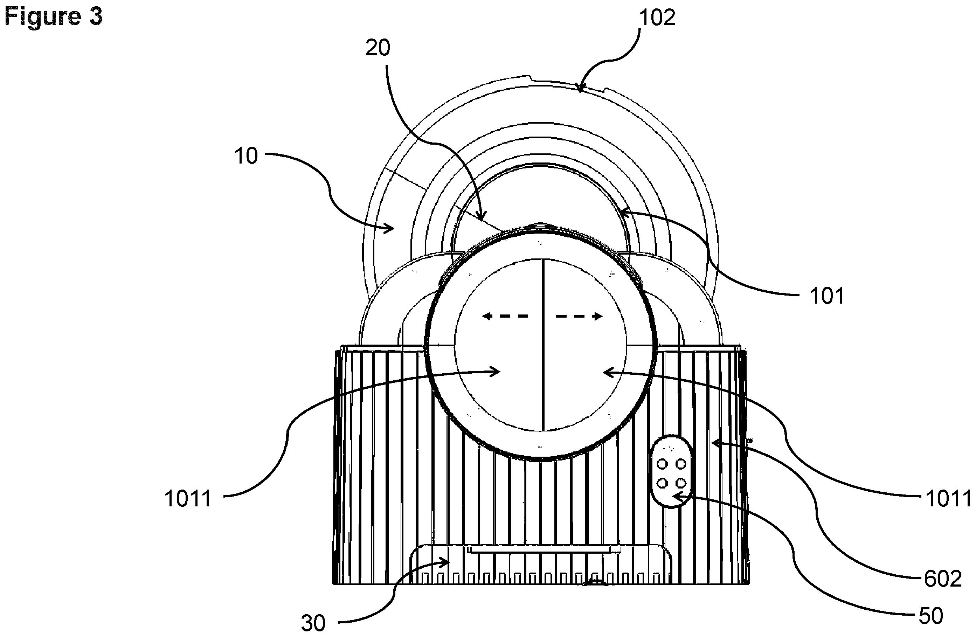

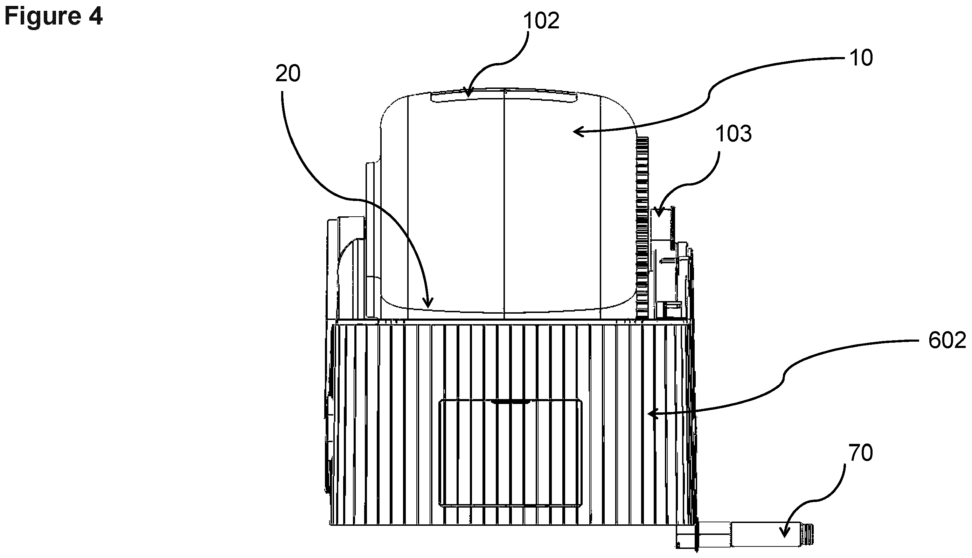

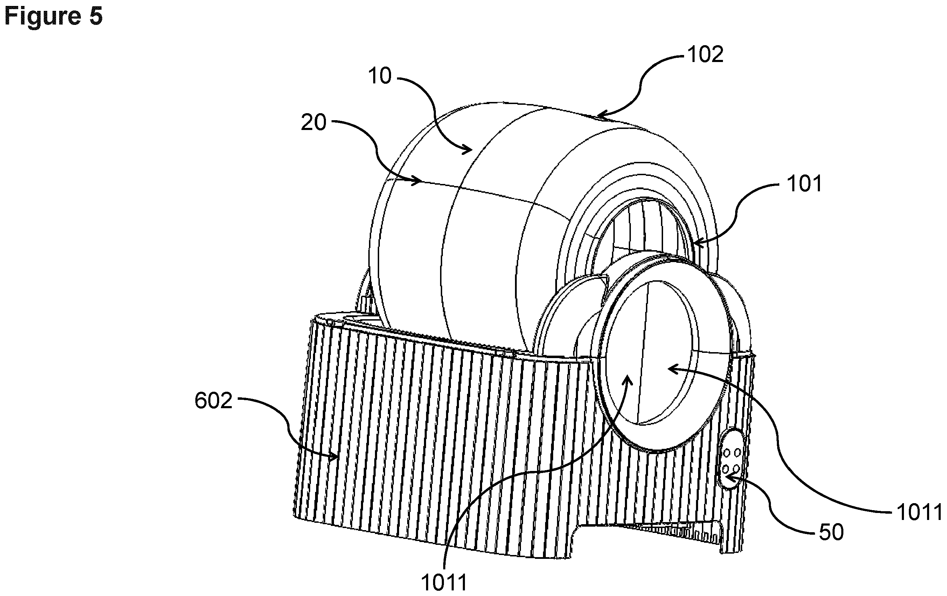

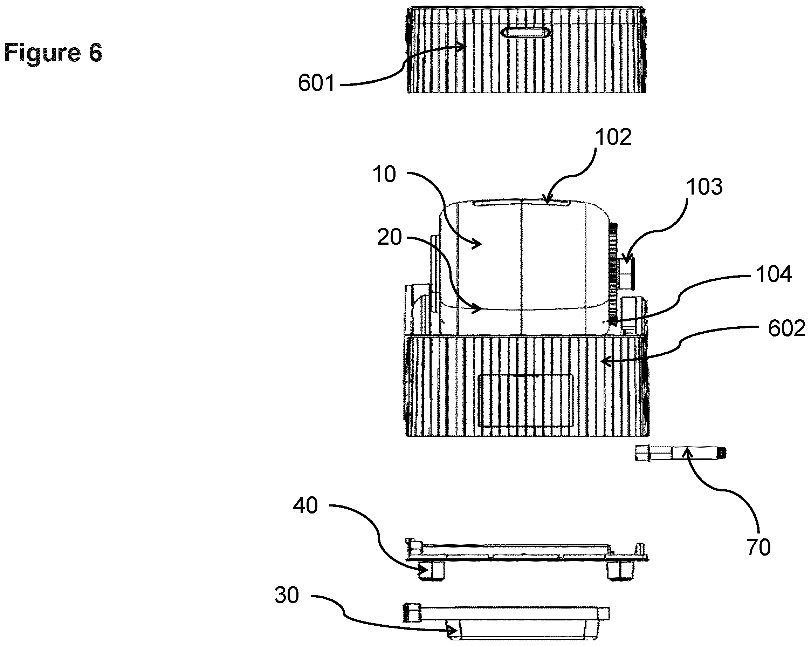

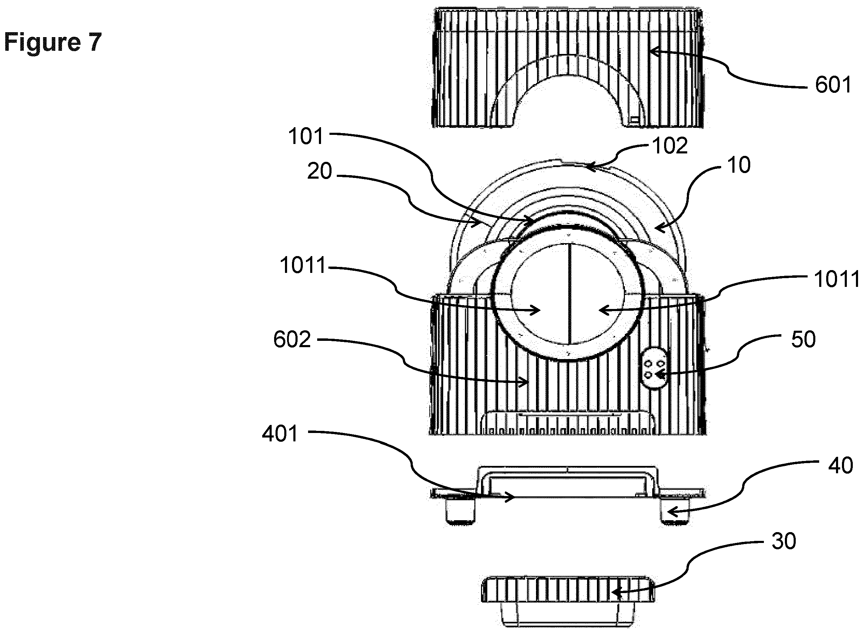

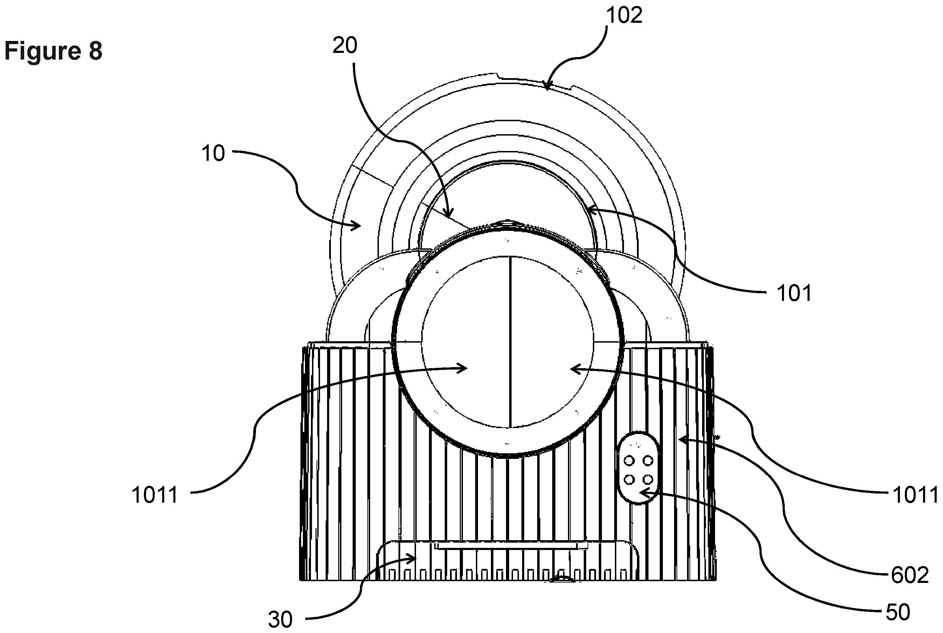

This embodiment provides an automatic cleaning cat litter box. With reference to Figures 1 to 10, the automatic cleaning cat litter box includes a rotatable chamber 10, and the chamber 10 can rotate around the rotation axis. The rotatable chamber 10 is used to contain cat litter.

### Replacement page for page 8 of the description

A top housing 601 is used to cover the rotatable chamber 10 and a bottom housing 602 is used to support the rotatable chamber 10. The rotatable chamber 10 has the first opening 101 defined in its outer surface and the closing member 1011 provided on said first opening 101, said first opening 101 being suitable for entry and exit of an animal. The closing member 1011 is used to close the first opening 101.

The closing member 1011 is a sliding door. T
9+he sliding door includes two sliding door leaves 91 and 92, a slide rail 93 for sliding the door leaves 91 and 92, and a sliding rail for driving the door leaves 91 and 92 to slide by action of a motor 94.

The closing member 1011, the sliding door, includes two sliding door leaves 91, 92 and a slide rail 93 for sliding the door leaves.

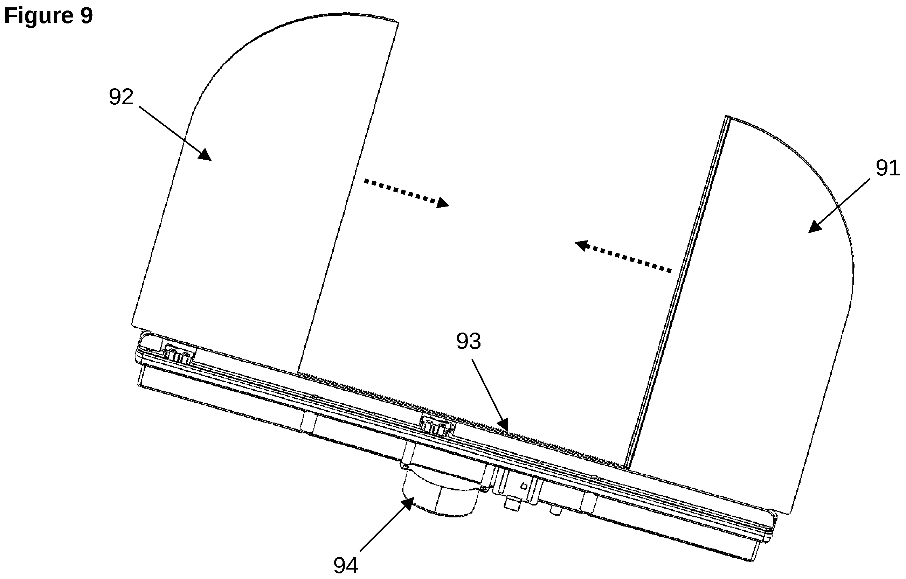

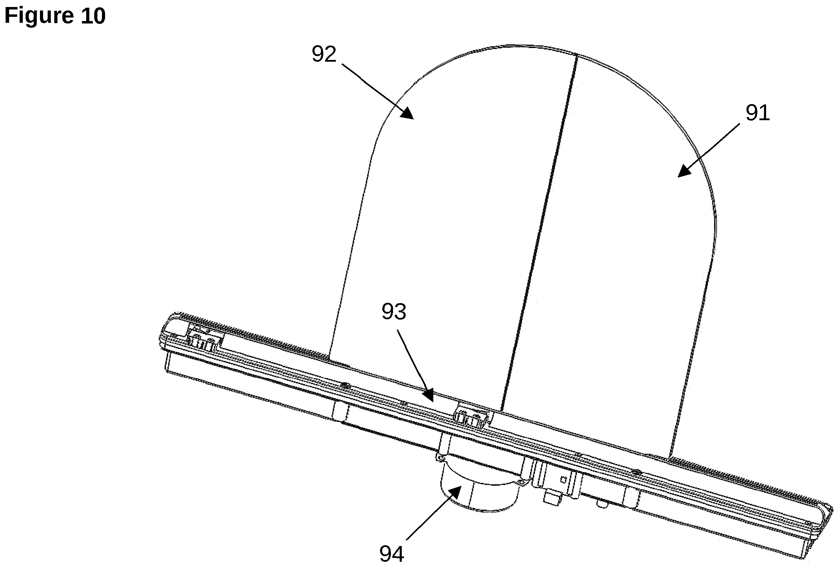

As shown in Figure 9, when the motor 94 drives the two door leaves 91 and 92 to slide toward each other, the two door leaves close the rotatable chamber 10 through snap connection, as shown in Figure 10. The edges of the door leaves are smooth and gentle to avoid scratching or pinching animals; the slide rails are also provided with rubber strips to allow the door leaves to slide along the slide rails, and the rubber strips are in close contact with the door leaves, thereby allowing the door leaves to slide. The rubber strip always covers the slide rail; the sliding door has good sealing performance after sliding and closing the first opening 1011, so as to reduce the leakage of smell as much as possible.

The rotatable chamber 10 has the second opening 102 defined in its outer surface, and the rotatable chamber 10 opens or closes the second opening 102 by rotation in order to selectively process the waste material passing therethrough.

The screen 20 is connected to the second opening 102 to screen out objects larger than a predetermined size, including cat excrement.

The rotatable chamber 10 has the third opening 103 and the fourth opening 104 defined in its outer surface; the third opening 103 is for sucking in air fluid and the fourth opening 104 is for the exit of air fluid.

When the first opening 101 and the second opening 102 are closed, the third opening 103 sucks in air fluid, and the fourth opening 104 discharges the air fluid, so that the air in the rotatable chamber 10 smells are removed.

Alternatively, the closing member 1011 is a sliding door, and the closing member 1011 closes the first opening 101 by sliding.

The third opening 103 is provided with a ventilation fan, and the air outlet is directed along the third opening 103 into the rotatable chamber 10 to fluidly transmit external fresh air into the rotatable chamber 10.

The automatic cleaning cat litter box also includes the excrement collection bin 30. When the screen 20 discharges the cat excrement through the second opening 102, the excrement collection bin 30 and the second opening 102 are in air fluid communication.

The self-cleaning cat litter box also includes the support base 40 for supporting the entire device.

The support seat 40 includes an elastic valve 401. When the screen 20 discharges the cat excrement through the second opening 102, the elastic valve cuts off the excrement collection bin 30 from the second opening 102.

A method for removing cat excrement and smells from cat litter is provided, comprising the following steps. After the integrated sensor 50 detects that the cat leaves the rotatable chamber 10, the cleaning procedure is started:
S1. The closing member 1011 closes the first opening 101.

The closing member 1011 is a sliding door, and the closing member 1011 closes the first opening 101 by sliding.

The closing member 1011 is a sliding door and includes two slidable door leaves 91 and 92 and a slide rail 93 for sliding the door leaves.

The motor 94 drives the two door leaves 91 and 92 to slide toward each other, and the two door leaves close the rotatable chamber 10 through snap connection.

The edges of the door leaf are smooth and gentle to avoid scratching or pinching animals.

A rubber strip is also provided on the slide rail, so that the door leaf slides along the slide rail, and the rubber strip is in close contact with the door leaf, so that the rubber strip always covers the slide rail.

The sliding door has good sealing performance after sliding and closing the first opening 1011, so as to reduce the leakage of smell as much as possible.

S2. The rotatable chamber 10 rotates in a first direction from the initial position, and the cat litter containing cat excrement is loaded into the screen 20. Under the rotation of the rotatable chamber 10, the elastic valve 401 included in the support base 40 opens, and the second opening 102 opens. The excrement collection bin 30 is in air fluid communication with the second opening 102.

S3. The screen 20 sifts out the cat litter under the rotation of the rotatable chamber 10 and discharges cat excrement to the excrement ,collection bin through the second opening 102 under the action of gravity.

S4. The rotatable chamber 10 rotates at a sufficient angle with in the first direction and then stops rotating. The rotatable chamber 10 rotates at the same angle in the direction opposite to the first direction, and the screen returns the cat litter, and at the same time, the elastic valve 401 contained in the support base 40 is closed under the reverse rotation of the rotatable chamber 10, and the second opening 102 is closed. The elastic valve 401 cuts off the air fluid communication between the excrement collection bin 30 and the second opening 102.

S5. The air fluid enters the rotatable chamber 10 through the third opening 103, and the air fluid in the rotatable chamber 10 is discharged through the fourth opening 104.

Finally, the closing member 1011 on the first opening 101 is reopened.

In this embodiment, in the first aspect, the rotatable chamber 10 is formed into a relatively closed space by closing the first opening 101 and the second opening 102, so that air circulation is performed, and cat excretion is removed. During the process of removing excrements and smells, the rotatable chamber 10 is relatively isolated from the user's indoor space to prevent smells and dust in the cat litter from spreading into the user's indoor space.

Secondly, during the process of cleaning up cat excrement and smell, the rotatable chamber 10 remains sealed at all times to prevent pets from entering the running rotatable chamber 10 and causing potential safety hazards.

Thirdly, during the entire cleaning process of removing cat excrement and smell from cat litter, the rotatable chamber 10 maintains a relatively closed space, reducing air circulation and cat litter rolling friction noise, thereby providing pets with a more quiet space.

The invention has been described with respect to one or more embodiments. However, it will be obvious to those skilled in the art that various changes and modifications can be made without departing from the scope of the invention as defined in the claims. Although the present invention has been described above with reference to some embodiments, various modifications may be made and components thereof may be replaced by equivalents without departing from the scope of the invention as defined in the claims.

In particular, as long as there is no structural conflict, various features in the various embodiments disclosed in the present invention can be combined with each other in any way. There is no exhaustive description of these combinations in this specification. For the sake of omitting space and saving resources.

Therefore, the present invention is not limited to the specific embodiments disclosed herein, but includes all technical solutions falling within the scope of the claims.

## Claims

1. Self-cleaning cat litter box including:
• a rotatable chamber (10) for containing cat litter, the rotatable chamber (10) having a first opening (101) defined in its outer surface and a closing member (1011) disposed on the first opening (101), the first opening being (101) suitable for animals to enter and exit, the closing member (1011) being a sliding door, the sliding door being driven to slide by a motor (94) and being used to at least partially close the first opening (101), the rotatable chamber (10) having a second opening (102) defined in its outer surface, in order to selectively process waste materials passing therethrough, wherein the rotatable chamber (10) is configured to open or close the second opening (102) by rotating;
• a screen (20) connected to the second opening (102) to screen out objects larger than a predetermined size, including cat excrement;
wherein the rotatable chamber (10) has a third opening (103) and a fourth opening (104) defined in its outer surface, the third opening (103) being provided with a ventilation fan and being for the intake of air and the fourth opening being for the exhaust of air, wherein the self-cleaning cat litter box is configured such that when the first opening (101) and the second opening (102) are closed, air is inhaled through the third opening (103) and discharged through the fourth opening, so that smells in the rotatable chamber (10) are removed.

2. Self-cleaning cat litter box according to claim 1,
wherein the sliding door includes at least one sliding door leaf (91, 92) and a slide rail (93) for sliding the door leaf (91, 92).

3. Self-cleaning cat litter box according to claim 2,
wherein the sliding door includes two door leaves (91, 92) and wherein the self-cleaning cat litter box is configured such that when the two door leaves (91, 92) slide toward each other, the two door leaves )91, 92) close the rotatable chamber (10) through snap-fitting.

4. Self-cleaning cat litter box according to claim 3,
wherein a rubber strip is also provided on the slide rail (93) to allow the door leaves (91, 92) to slide along the slide rail (93), and the rubber strip and the door leaves (91, 92) closely adhere to each other so that the rubber strip always covers the slide rail (93).

5. Self-cleaning cat litter box according to claim 1,
wherein the self-cleaning cat litter box further includes an excrement collection bin (30), wherein the self-cleaning cat litter box is configured such that when the screen (20) drains the cat excrement out of the rotatable chamber (10) through the second opening (102) and when excrements are collected, the excrement collection bin (30) is in air fluid communication with the second opening (102).

6. Self-cleaning cat litter box according to claim 5,
wherein the self-cleaning cat litter box further includes a support seat (40) disposed above the excrement collection bin (30), and the support seat (40) includes an elastic valve (401), wherein the self-cleaning cat litter box is configured such that after the cat excrement is discharged through the second opening (102), the elastic valve (401) cuts off the air fluid communication between the excrement collection bin (30) and the second opening (102).

## Patentansprüche

1. Selbstreinigende Katzentoilette, umfassend:
• eine drehbare Kammer (10) zur Aufnahme von Katzenstreu, wobei die drehbare Kammer (10) eine erste Öffnung (101) in ihrer Außenfläche und ein an der ersten Öffnung (101) angeordnetes Verschlusselement (1011) aufweist, die erste Öffnung (101) den Ein- und Ausstieg von Tieren ermöglicht, das Verschlusselement (1011) eine Schiebetür ist, die Schiebetür von einem Motor (94) schiebbar angetrieben wird und die erste Öffnung (101) zumindest teilweise verschliesst, die drehbare Kammer (10) eine zweite Öffnung (102) in ihrer Aussenfläche aufweist, um durch sie hindurchtretende Abfallstoffe selektiv zu verarbeiten, die drehbare Kammer (10) so konfiguriert ist, dass sie die zweite Öffnung (102) durch Drehen öffnet oder schliesst;
• ein mit der zweiten Öffnung (102) verbundenes Sieb (20) zum Aussieben von Objekten, die grösser als eine vorgegebene Grösse sind, einschliesslich Katzenkot;
wobei die drehbare Kammer (10) eine dritte Öffnung (103) und eine vierte (104) Öffnung in ihrer Aussenfläche aufweist, die dritte Öffnung (103) mit einem Ventilator ausgestattet ist und der Luftzufuhr dient, die vierte Öffnung der Luftabfuhr dient, die selbstreinigende Katzentoilette so konfiguriert ist, dass bei geschlossener ersten Öffnung (101) und geschlossener zweiten Öffnung (102) Luft durch die dritte Öffnung (103) angesaugt und durch die vierte Öffnung (104) abgeführt wird, wodurch Gerüche in der drehbaren Kammer (10) entfernt werden.

2. Selbstreinigende Katzentoilette nach Anspruch 1,
wobei die Schiebetür mindestens ein Türblatt (91, 92) und eine Gleitschiene (93) zum Verschieben des Türblatts (91, 92) umfasst.

3. Selbstreinigende Katzentoilette nach Anspruch 2,
wobei die Schiebetür zwei Türblätter (91, 92) aufweist und die selbstreinigende Katzentoilette so gestaltet ist, dass die beiden Türblätter (91, 92) beim Schieben aufeinander zu die drehbare Kammer (10) durch Einrasten verschliessen.

4. Selbstreinigende Katzentoilette nach Anspruch 3,
wobei an der Gleitschiene (93) ein Gummistreifen angebracht ist, der das Gleiten der Türblätter (91, 92) entlang der Gleitschiene (93) ermöglicht, und wobei der Gummistreifen und die Türblätter (91, 92) eng aneinander haften, sodass der Gummistreifen die Gleitschiene (93) stets abdeckt.

5. Selbstreinigende Katzentoilette nach Anspruch 1, wobei die selbstreinigende Katzentoilette zusätzlich einen Kotsammelbehälter (30) umfasst und die selbstreinigende Katzentoilette so konfiguriert ist, dass der Kotsammelbehälter (30) mit der zweiten Öffnung (102) in luft- und flüssigkeitstechnischer Verbindung steht, wenn das Sieb (20) den Katzenkot durch die zweite Öffnung (102) aus der drehbaren Kammer (10) ableitet und der Kot gesammelt wird.

6. Selbstreinigende Katzentoilette nach Anspruch 5, wobei die selbstreinigende Katzentoilette ausserdem einen Stützsitz (40) oberhalb des Kotsammelbehälters (30) umfasst und der Stützsitz (40) ein elastisches Ventil (401) aufweist, wobei die selbstreinigende Katzentoilette so konfiguriert ist, dass das elastische Ventil (401) nach dem Ableiten des Katzenkots durch die zweite Öffnung (102) die Luft- und Flüssigkeitsverbindung zwischen dem Kotsammelbehälter (30) und der zweiten Öffnung (102) unterbricht.

## Revendications

1. Bac à litière autonettoyant pour chat comprenant :
• une chambre rotative (10) destinée à contenir la litière, cette chambre rotative (10) présentant une première ouverture (101) définie sur sa surface extérieure et un élément de fermeture (1011) disposé sur cette première ouverture (101), la première ouverture (101) est adaptée à l'entrée et à la sortie d'animaux, l'élément de fermeture (1011) est une porte coulissante entraînée par un moteur (94) et utilisée pour fermer au moins partiellement la première ouverture (101), la chambre rotative (10) présente une seconde ouverture (102) définie sur sa surface extérieure, afin de traiter sélectivement les déchets qui la traversent, la chambre rotative (10) est configurée pour ouvrir ou fermer la seconde ouverture (102) par rotation ;
• un tamis (20) relié à la seconde ouverture (102) pour filtrer les objets dépassant une taille prédéterminée, notamment les excréments de chat, la chambre rotative (10) comporte une troisième ouverture (103) et une quatrième ouverture (104) définies sur sa surface extérieure, la troisième ouverture (103) est équipée d'un ventilateur et sert à l'admission d'air, tandis que la quatrième ouverture sert à l'évacuation d'air, le bac à litière autonettoyant pour chat est configuré de telle sorte que, lorsque les première et deuxième ouvertures (101) sont fermées, l'air est aspiré par la troisième ouverture (103) et évacué par la quatrième ouverture, ce qui élimine les odeurs présentes dans la chambre rotative (10).

2. Bac à litière autonettoyant pour chat selon la revendication 1,
dans lequel la porte coulissante comprend au moins un vantail coulissant (91, 92) et une glissière (93) pour le coulissement du vantail (91, 92).

3. Bac à litière autonettoyant pour chat selon la revendication 2,
dans lequel la porte coulissante comprend deux vantaux (91, 92) et dans lequel le bac à litière autonettoyant est configuré de telle sorte que, lorsque les deux vantaux (91, 92) coulissent l'un vers l'autre, ils ferment la chambre rotative (10) par encliquetage.

4. Bac à litière autonettoyant pour chat selon la revendication 3, dans lequel une bande de caoutchouc est également prévue sur la glissière (93) pour permettre aux vantaux (91, 92) de coulisser le long de celle-ci, la bande de caoutchouc et les vantaux (91, 92) adhèrent étroitement l'un à l'autre de sorte que la bande de caoutchouc recouvre toujours la glissière (93).

5. Bac à litière autonettoyant pour chat selon la revendication 1, comprenant en outre un bac de récupération des excréments (30), ce bac est configuré de telle sorte que, lorsque le tamis (20) évacue les excréments du chat hors de la chambre rotative (10) par la seconde ouverture (102) et que les excréments sont collectés, le bac de récupération des excréments (30) est en communication air-fluidique avec la seconde ouverture (102).

6. Bac à litière autonettoyant pour chat selon la revendication 5, comprenant en outre un support (40) disposé au-dessus du bac de collecte des excréments (30), et ce support (40) comprenant une valve élastique (401), le bac à litière autonettoyant pour chat est configuré de telle sorte qu'après l'évacuation des excréments par la seconde ouverture (102), la valve élastique (401) coupe la communication air-fluidique entre le bac de collecte des excréments (30) et la seconde ouverture (102).
